# FASCICULE DE BREVET EUROPEEN

(11) **EP 1 520 654 B1**
(45) Date de publication et mention de la délivrance du brevet: **14.04.2010**
(21) Numéro de dépôt: 04102068.6
(22) Date de dépôt: 12.05.2004
(51) Int. Cl.: B23K 26/32, B23K 26/34, B23K 31/02

(54) **Procédé d'assemblage de deux tôles revêtues d'une couche protectrice**
Verfahren zum Zusammenbau zweier mit einer Schutzschicht bedeckter Bleche
Process for assembling to metal sheets coated with a protected layer

(30) Priorité: 12.05.2003 FR 0350151
(43) Date de publication de la demande: 06.04.2005
(73) Titulaire: COMMISSARIAT A L'ENERGIE ATOMIQUE, 75015 Paris (FR)
(72) Inventeur: GOBY, Ludovic, 75019, PARIS (FR); AUBERT, Philippe, 75016, PARIS (FR); CHAVENTON, François, 91700, Sainte Genevieve des Bois (FR)
(74) Mandataire: Poulin, Gérard

(56) Documents cités:
- EP-A- 0 538 087
- DE-A- 19 618 256
- DE-A- 19 643 434

## Description

Le sujet de cette invention est un procédé d'assemblage d'au moins deux tôles revêtues d'une couche protectrice.

Elle s'applique avant tout aux assemblages de ces tôles par des cordons de soudure rectilignes ou circulaires. La couche protectrice peut provenir d'une galvanisation, d'un électrozingage ou d'autres procédés. Le procédé de soudage peut être au laser, électrique sous flux gazeux (procédé SEFG), ou par résistance, ou autre.

Les soudages de tôles de ce genre ont pour conséquence de détruire le revêtement protecteur et d'affaiblir l'assemblage contre la corrosion à l'endroit même où il est généralement le plus vulnérable.

Quelle que soit la composition du cordon de soudure, il ne possède pas les mêmes garanties contre la corrosion que les tôles qu'il assemble, même si des précautions comme l'emploi d'une atmosphère gazeuse inerte sont prises pendant le soudage. La qualité de la surface est en fait rétablie par des techniques de dépôt classiques en surface par électrolyse ou immersion, par exemple dans un bain de zinc en fusion. Cela est incommode et dispendieux pour une portion petite de la surface. La mise en oeuvre industrielle en est difficile.

On propose ici de recourir à un procédé différent pour rétablir le revêtement de la surface à l'endroit du cordon de soudure : il est conforme à la revendication 1, dont le document DE - 196 43 434 - A forme le préambule.

La solution de l'invention est un procédé selon la revendication 1.

Il est avantageux que cette opération soit faite juste après le soudage, par un outil accompagnant le moyen de soudage en le suivant à peu de distance. Aucun temps n' est ainsi perdu dans un procédé industriel de fabrication, et il est avantageux et caractéristique de l'invention de reformer la couche protectrice sur l'assemblage encore chaud, puisque la chaleur qu'on doit apporter est réduite et une meilleure adhérence pourra être obtenue dans bien des cas si le recouvrement s'effectue sur une surface encore chaude.

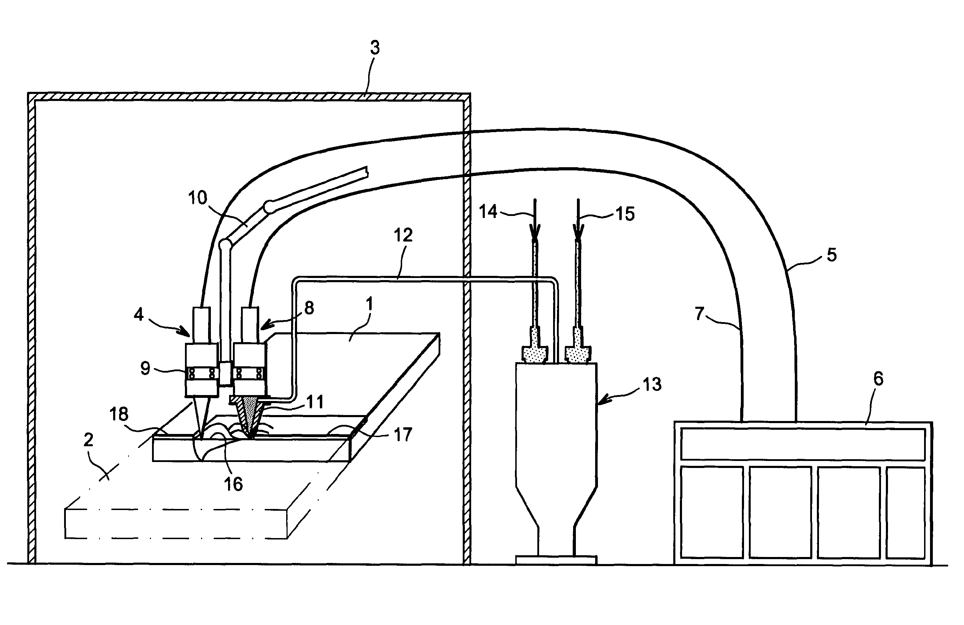

L' invention sera maintenant décrite en référence à la figure unique, qui décrit une réalisation possible, sans caractère limitatif.

Les tôles assemblées portent les références 1 et 2. Leur nombre pourrait être supérieur à deux. Elles ont été placées dans une cabine de soudage 3 dans laquelle peut être insufflée une atmosphère de la composition voulue. L'outil de soudage est une tête focalisatrice de laser 4 reliée par une fibre optique 5 à une source de rayonnement de laser 6. Une autre fibre 7 part de la source 6 et aboutit à une autre tête focalisatrice de laser 8. Les têtes 4 et 8 sont unies par une armature 9 qui est déplacée par un bras de robot 10 ou par un autre moyen convenable. La tête 8 porte une buse 11 sous elle. Un tuyau 12 souple relie l'intérieur de la buse 11 à un distributeur 13 comprenant un réservoir de poudre de zinc 14 et une source de gaz porteur 15. Le distributeur 13 est conçu pour faire circuler sans cesse un débit de gaz porteur dans le tuyau 12 et pour verser un débit de poudre constant dans le flux de gaz porteur. Ainsi, ce débit constant de poudre apparaît dans la buse 11, et le faisceau du laser le fait fondre en gouttelettes.

En déplaçant les têtes 4 et 8 au long du joint des tôles 1 et 2, le bras 10 crée un cordon de soudure grâce à la première tête 4 qui forme un bain de fusion 16 qui se solidifie ensuite pour donner le cordon de soudure. La seconde tête 8 est maintenue derrière la première 4 au-dessus d'une région solidifiée mais encore chaude du cordon de soudure sur laquelle les gouttelettes de la poudre fondue se déposent. Les gouttelettes s'unissent pour donner une couche continue 17. Après la solidification, la couche 17 remplace la couche 18 de protection que le soudage a détruite. Si les têtes 4 et 8 appartenaient à des supports différents, il serait impossible de les approcher autant l'une de l'autre sans collisions, et les réglages de mouvements seraient plus délicats.

En variante, le distributeur de poudre 13 pourrait être remplacé par un distributeur de fil d'apport. Le tuyau 12 serait remplacé par une gaine de circulation du fil, et le fil aboutirait dans la buse 11 où il fondrait de la même façon.

Le rayonnement de laser est beaucoup plus faible dans la seconde tête 8 que dans la première tête 4, ce qu'on recherche pour réduire les coûts et d'autant plus faible que les deux sources de chaleur sont proches. Il pourrait aussi provenir d'une dérivation d'une partie du rayonnement principal par un élément optique de séparation ou autre. L'appareillage de reconstitution de la couche de protection ne complique ni n'enchérit beaucoup l'appareillage classique de soudage. La vitesse de soudage reste la même que dans les procédés habituels. Comme le cordon de soudure est immédiatement protégé, les risques d'oxydation ou plus généralement de corrosion sont éliminés. On peut envisager un grand nombre de compositions de la matière protectrice, surtout si elle est fournie sous forme poudreuse puisque des mélanges de corps peuvent être facilement utilisés. L'utilisation d'un fil est cependant préférée puisque que les risques de salissures par dispersion de poudre sont éliminés. Enfin, il est intéressant de remarquer que le procédé peut être accompli dans toutes les positions, même avec l'utilisation d'une poudre, puisque le courant gazeux entraîne la matière de recouvrement vers le joint des pièces assemblées et que les gouttelettes fondues adhèrent jusqu'à la solidification.

## Revendications

1. Procédé d'assemblage d'au moins deux tôles (1, 2) revêtues d'une couche protectrice (18) comprenant un soudage des tôles par une création d'un cordon de soudure par un laser de soudage (4), comprenant une étape de recouvrement du cordon de soudure par une matière protectrice de reconstitution de la couche (17), la matière étant apportée en poudre ou en fil continuellement à une source de chaleur (8) se déplaçant au long du cordon de soudure, fondue par la source de chaleur, et laissée à se solidifier sur le cordon de soudure, l'étape de recouvrement étant faite juste après que le cordon de soudure a été déposé, **caractérisé en ce que** la source de chaleur est solidaire du laser de soudage (4), et le laser de soudage (4) et la source de chaleur utilisent tous deux soit des lasers associés soit un laser unique dont une partie de l'énergie est prélevée par dérivation pour la reconstitution de la couche de protection.

## Claims

1. A process for assembling at least two sheets (1, 2) covered with a protective layer (18), by a welding of the sheets in creating a weld string by a welding laser (4), comprising a step of covering the weld string by a protective material reconstituting the layer (17), the material being continuously brought in powder or in a wire to a heat source (8) moving along the weld string, melted by the heat source, and let to solidificate on the weld string, the covering step being made just after the weld string has been laid, **characterised in that** the heat source is bound with the welding laser (4), and the welding laser (4) and the heat source both use either associated lasers or a single laser, a part of the energy of which is taken by by-passing for the reconstituting of the protective layer.

## Patentansprüche

1. Verfahren zum Zusammenbau wenigstens zweier mit einer Schutzschicht (18) beschichteter Bleche (1, 2), eine Verschweißung der Bleche durch das Legen einer Schweißnaht mit Hilfe eines Schweißlasers (4) und einen Schritt zur Beschichtung der Schweißnaht mit einem Schutzmaterial zur Wiederherstellung der Schicht (17) umfassend, wobei dieses Material kontinuierlich, pulver- oder drahtförmig, einer sich längs der Schweißnaht verschiebenden Wärmequelle (8) zugeführt wird, durch die Wärmequelle geschmolzen und dann sich selbst überlassen wird, um auf der Schweißnaht zu erstarren, wobei der Beschichtungsschritt direkt nach dem Legen der Schweißnaht erfolgt,
**dadurch gekennzeichnet, dass** die Wärmequelle fest mit dem Schweißlaser (4) verbunden ist und beide, der Schweißlaser (4) und die Wärmequelle, entweder assoziierte Laser oder einen einzigen Laser umfassen, von dessen Energie ein Teil durch Abzweigung entnommen wird, um die Schutzschicht wiederherzustellen.
